# EUROPÄISCHE PATENTSCHRIFT

(11) **EP 0 858 408 B1**
(45) Veröffentlichungstag und Bekanntmachung des Hinweises auf die Patenterteilung: **23.02.2000**
(21) Anmeldenummer: 96937309.1
(22) Anmeldetag: 31.10.1996
(51) Int. Cl.: B62D 5/06, B62D 5/30

(54) **SERVOLENKUNG FÜR KRAFTFAHRZEUGE**
SERVO STEERING FOR MOTOR VEHICLES
DIRECTION ASSISTEE POUR VEHICULES A MOTEUR

(30) Priorität: 03.11.1995 DE 19540956
(43) Veröffentlichungstag der Anmeldung: 19.08.1998
(73) Patentinhaber: DaimlerChrysler AG, 70567 Stuttgart (DE)
(72) Erfinder: BOHNER, Hubert, D-71032 Böblingen (DE); MOSER, Martin, D-70736 Fellbach (DE)
(74) Vertreter: Dahmen, Toni, Dipl.-Ing.
(86) Internationale Anmeldenummer: EP9604734
(87) Internationale Veröffentlichungsnummer: WO9717247

(56) Entgegenhaltungen:
- WO-A-90/12723
- DE-A- 4 409 928
- PATENT ABSTRACTS OF JAPAN vol. 016, no. 177 (M-1241), 28.April 1992 & JP 04 019271 A (MAZDA MOTOR CORP), 23.Januar 1992,
- PATENT ABSTRACTS OF JAPAN vol. 016, no. 135 (M-1230), 6.April 1992 & JP 03 295765 A (MAZDA MOTOR CORP), 26.Dezember 1991,

## Beschreibung

Die Erfindung betrifft eine Servolenkung für Kraftfahrzeuge, mit einer mechanischen Antriebsverbindung zwischen einer Lenkhandhabe, insbesondere einem Lenkhandrad, und einer Lenkgetriebeanordnung zur Lenkbetätigung von Fahrzeugrädern und mit einem mit der Lenkgetriebeanordnung antriebsgekoppelten Servomotor sowie einer Kupplung, durch die die Antriebsverbindung auftrennbar ist, wobei der Servomotor bei geöffneter Kupplung über ein Steuerventil steuerbar ist, welches seinerseits mittels einer Regelstrecke in Abhängigkeit von einer Differenz zwischen einer mit dem Lenkwinkel der Fahrzeugräder korrelierten ersten Größe und einer zumindest mit dem Stellhub der Lenkhandhabe korrelierten zweiten Größe steuerbar ist, wobei zusätzlich ein mit der Antriebsverbindung gekoppeltes und analog zu den von der Antriebsverbindung übertragenen Kräften oder Momenten steuerbares Servoventil vorhanden ist, über das der Servomotor steuerbar mit Druck- und Niederdruckanschlüssen verbindbar ist, derart, daß der Servomotor eine die notwendige Betätigungskraft an der Handhabe vermindernde Servokraft erzeugt, und wobei der Servomotor durch eine Umschaltventilanordnung entweder mit Motoranschlüssen des Steuerventils cder mit Motoranschlüssen des Servoventils verbunden ist.

Eine entsprechende Servolenkung ist Gegenstand der JP-A-4019271.

Eine solche Servolenkung bietet den Vorteil, daß bei normalen Betriebszuständen die Übersetzung zwischen dem Stellhub der Lenkhandhabe und der Lenkwinkeländerung der gelenkten Fahrzeugräder prinzipiell beliebig einstellbar ist und bspw. in Abhängigkeit von der Fahrgeschwindigkeit gesteuert werden kann. Darüber hinaus besteht die Möglichkeit, durch ein autonomes Steuerungssystem Lenkeingriffe vorzunehmen, die beispielsweise dazu dienen, Seitenwindeinflüssen oder Schleuderbewegungen des Fahrzeuges entgegenzuwirken.

Auch aus der WO 90/12 723 ist eine Fahrzeuglenkung bekannt, bei der eine für den Notfall vorgesehene mechanische Zwangskopplung zwischen einem Lenkhandrad und Fahrzeuglenkrädern normalerweise aufgetrennt ist. In diesem Falle werden dann ein zur Lenkverstellung der Fahrzeuglenkräder dienendes erstes hydraulisches Stellaggregat und ein zur Erzeugung einer am Lenkhandrad fühlbaren Handkraft dienendes zweites hydraulisches Stellaggregat wirksam. Beide Stellaggregate werden von einer Steuerelektronik gesteuert. Diese Steuerelektronik betätigt einerseits das den Fahrzeuglenkrädern zugeordnete erste hydraulische Stellaggregat entsprechend den Signalen eines vom Lenkhandrad betätigten Sollwertgebers für den gewünschten Lenkwinkel. Andererseits wird von der Steuerelektronik das zur Erzeugung der Handkraft dienende, dem Lenkhandrad zugeordnete zweite hydraulische Stellaggregat betätigt, wobei verschiedenartige Parameter berücksichtigt werden können. Mittels der Steuerelektronik besteht die Möglichkeit, das Verhältnis zwischen Lenkwinkeländerung der Fahrzeuglenkräder und Drehwinkeländerung des Lenkhandrades auf ein für eine gute Handhabbarkeit des Fahrzeuges wünschenswertes Maß einzustellen, ohne vom Fahrer einen übermäßigen Kraftaufwand fordern zu müssen. Denn der Fahrer muß lediglich den Widerstand des zur Einstellung der Handkraft dienenden zweiten Stellaggregates überwinden. Die tatsächlich für die Lenkverstellung der Fahrzeuglenkräder notwendigen Kräfte werden vom ersten Stellaggregat aufgebracht. Im Ergebnis läßt sich damit eine leichgängige und gleichwohl direkte Lenkung verwirklichen, bei der eine relativ geringe Drehverstellung des Lenkhandrades zu einer deutlichen Lenkwinkeländerung der Fahrzeuglenkräder führt. Nur bei einem Notfall wird eine mechanische Zwangskopplung zwischen Lenkhandrad und Fahrzeuglenkrädern eingeschaltet. In diesem Falle muß bei einem System der WO 90/12 723 zur Begrenzung der notwendigen Handkraft eine vergleichsweise indirekte Lenkung - eine größere Drehverstellung des Lenkhandrades führt zu einer relativ geringen Lenkwinkeländerung der Fahrzeuglenkräder - in Kauf genommen werden.

Aufgabe der Erfindung ist es nun, bei einer Servolenkung der eingangs angegebenen Art eine erhöhte Sicherheit zu erreichen.

Diese Aufgabe wird erfindungsgemäß dadurch gelöst, daß der Servomotor über normal geöffnete Umschaltventile mit den Motoranschlüssen des Servoventils und über normal geschlossene Umschaltventile mit den Motoranschlüssen des Steuerventils verbindbar ist und diese Umschaltventile nur bei fehlerfrei arbeitender Regelstrecke von derselben in ihre jeweils andere Lage steuerbar sind.

Die Erfindung beruht auf dem allgemeinen Gedanken, die Lenkung bei Fehlfunktionen der Regelstrecke als herkömmliche hydraulische Servolenkung arbeiten zu lassen. Dies wird durch die erfindungsgemäß vorgesehene Arbeitsweise der vorgenannten Umschaltventile erreicht, die es ermöglichen, zwischen zwei Betriebszuständen der Lenkung umzuschalten.

Das erfindungsgemäße System zeichnet sich durch höchste Sicherheit aus, weil es ohne weiteres möglich ist, daß die Kupplung sofort in ihren geschlossenen Zustand übergeht und damit den mechanischen Durchtrieb zwischen Lenkhandhabe und Fahrzeuglenkrädern herstellt, sobald Fehler in der Regelstrecke, welche sich in grundsätzlich bekannter Weise ständig selbst auf fehlerfreie Funktion überprüfen kann, festgestellt werden.

Bei geöffneter Kupplung können prinzipiell beliebige Übersetzungsverhältnisse zwischen Lenkhandhabe und Fahrzeuglenkrädern verwirklicht werden. Darüber hinaus können bei der Vorgabe der Sollwerte für den Lenkwinkel der Fahrzeuglenkräder auch auf das Fahrzeug einwirkende Störkräfte, wie Seitenwind oder sonstige Parameter, wie z.B. die Giergeschwindigkeit, berücksichtigt werden.

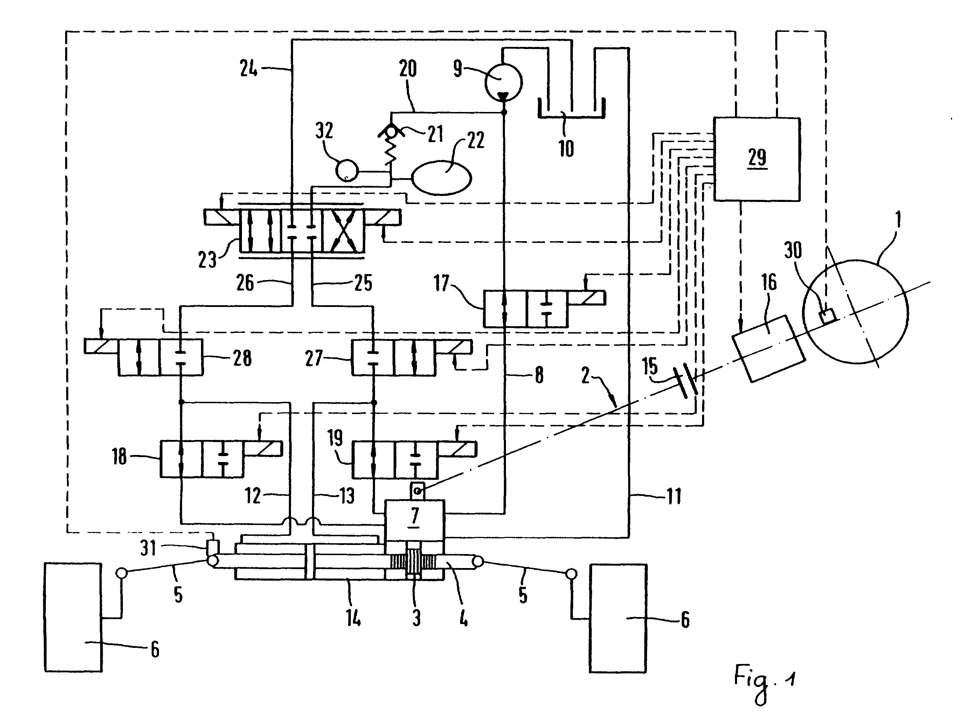

Im übrigen wird hinsichtlich vorteilhafter Merkmale der Erfindung auf die Ansprüche sowie die nachfolgende Erläuterung der Zeichnung verwiesen, anhand der besonders bevorzugte Ausführungsformen der Erfindung beschrieben werden.

Dabei zeigt die einzige Figur eine schaltplanartig schematisierte Gesamtdarstellung in der erfindungsgemäßen Servolenkung.

Gemäß der Zeichnung ist ein Lenkhandrad 1 in grundsätzlich bekannter Weise über eine Lenksäule 2 mit einem Zahnritzel 3 verbunden, welches mit einer Zahnstange 4 kämmt, die über Spurstangen 5 mit Fahrzeuglenkrädern 6 gekoppelt ist, so daß die Fahrzeuglenkräder 6 bei Drehung des Lenkhandrades 1 nach rechts oder links in entsprechende Richtung gelenkt werden.

Zwischen dem Zahnritzel 3 und der Lenksäule 2 ist ein nach Art einer Drehschieberanordnung ausgebildetes Servoventil 7 angeordnet, welches zwei miteinander durch einen Drehstab (nicht dargestellt) drehelastisch verbundene Steuerteile aufweist, von denen eines drehfest mit dem Zahnritzel 3 und eines drehfest mit der Lenksäule 2 verbunden ist. In Abhängigkeit von dem zwischen dem Zahnritzel 3 und der Lenksäule 2 übertragenen Drehmoment werden die beiden Steuerteile des Servoventiles 7 relativ zueinander mehr oder weniger weit verdreht. Diese Relativdrehung wird in weiter unten erläuterten Weise zur Steuerung des Servoventiles 7 ausgenutzt.

Über eine Eingangsleitung 8 ist das Servoventil 7 mit der Druckseite einer Hydraulikpumpe 9 verbunden, die saugseitig an ein Hydraulikreservoir 10 angeschlossen ist, mit dem das Servoventil 7 über eine Ausgangsleitung 11 verbunden ist. Außerdem ist das Servoventil 7 an zwei Motorleitungen 12 und 13 angeschlossen, die jeweils mit einer Kammer eines im dargestellten Beispiel als Servomotor dienenden doppelt wirkenden Kolben-Zylinder-Aggregates 14 kommunizieren, dessen Kolben auf einer die Zahnstange 4 fortsetzenden Kolbenstange angeordnet ist. Insoweit entspricht das dargestellte System konventionellen Servolenkungen.

Bei der Erfindung ist außerdem vorgesehen, daß in der Lenksäule 2 eine Kupplung 15 angeordnet ist, durch die sich die mechanische Antriebsverbindung zwischen dem Lenkhandrad 1 und den Lenkrädern 6 auftrennen läßt. Handradseitig der Kupplung 15 ist an der Lenksäule 2 ein Handkraftsteller 16 angeordnet, der bspw. als selbsthemmungsfreier Elektromotor ausgebildet ist. Damit kann, insbesondere bei geöffneter Kupplung 15, am Lenkhandrad 1 ein steuerbarer Betätigungswiderstand bewirkt werden.

In der Eingangsleitung 8 sowie in den Motorleitungen 12 und 13 sind normal offene Absperrventile 17, 18 und 19 angeordnet. Diese Absperrventile 17, 18 und 19 können jeweils mittels zugeordneter Elektromagnete gegen die Kraft von Rückstellfederungen in eine Schließlage umgestellt werden. Sobald die elektrische Stromzufuhr zu den Elektromagneten abgeschaltet wird, fallen die Ventile 17, 18 und 19 in die dargestellte Öffnungslage zurück.

Von der Druckseite der Hydraulikpumpe 9 führt eine weitere Leitung 20 über ein Rückschlagventil 21, welches einen Rückfluß zur Pumpe 9 verhindert, zu einem Druckspeicher 22 sowie einem Anschluß einer Steuerventilanordnung 23. Ein weiterer Anschluß dieser Steuerventilanordnung 23 ist über eine Rückflußleitung 24 mit dem Hydraulikreservoir 10 verbunden. Zwei weitere Anschlüsse der Steuerventilanordnung 23 sind über Leitungen 25 und 26, die durch Absperrventile 27 und 28 gesteuert werden, mit den Motorleitungen 12 und 13 verbunden, und zwar zwischen den Absperrventilen 18 und 19 und dem Kolben-Zylinder-Aggregat 14.

Die Steuerventilanordnung 23 wird durch eine Federanordnung in die dargestellte Mittellage gedrängt, in der die Leitungen 25 und 26 gegenüber den beiden anderen Anschlüssen der Steuerventilanordnung 23 abgesperrt sind. Mittels Elektromagnete läßt sich die Steuerventilanordnung 23 in zwei zueinander entgegengesetzten Richtungen verstellen, derart, daß entweder zwischen dem Druckspeicher 22 und der Leitung 25 sowie der Leitung 26 und der Leitung 24 oder zwischen dem Druckspeicher 22 und der Leitung 26 sowie der Leitung 25 und der Leitung 24 ein mehr oder weniger stark gedrosselter bzw. entdrosselter Durchgang geöffnet wird.

Die Absperrventile 27 und 28 können gegen die Kraft von Rückstellfederungen durch Elektromagnete aus der normalerweise eingenommenen und in der Zeichnung dargestellten Schließlage in ihre Öffnungslage umgeschaltet werden. Bei Abschalten der elektrischen Stromzufuhr zu den Elektromagneten fallen die Absperrventile 27 und 28 in die dargestellte Schließlage zurück.

Die Ventile 17 bis 19 und 23 sowie 27 und 28 werden mittels einer Steuerelektronik 29 betätigt, die außerdem den Handkraftsteller 16 steuert sowie die Pumpe 9 steuern kann. Eingangsseite ist die Steuerelektronik 29 mit einem Sensor 30 für die Drehstellung des Lenkhandrades 1 sowie einem Sensor 31, dessen Signale den Lenkwinkel der Fahrzeuglenkräder 6 wiedergeben, verbunden. Außerdem kann die Steuerelektronik 29 eingangsseitig mit einem Drucksensor 32 verbunden sein, der den Druck des Druckspeichers 22 registriert.

Die dargestellte Anordnung funktioniert wie folgt:

Zunächst wird davon ausgegangen, daß die Kupplung 15 geschlossen ist und alle Absperrventile 15 bis 18 und 27 sowie 28 die in der Zeichnung dargestellten Lagen einnehmen. In diesem Falle arbeitet die Lenkung wie eine herkömmliche Servolenkung. In Abhängigkeit von dem über die Lenksäule 2 übertragenen Drehmoment werden die Steuerteile des Servoventiles 7 mehr oder weniger stark relativ zueinander verstellt. Dies hat zur Folge, daß bei arbeitender Hydraulikpumpe 9 zwischen den Motorleitungen 12 und 13 eine mehr oder weniger große Druckdifferenz in der einen oder anderen Richtung, je nach Richtungssinn des Drehmomentes, auftritt und das Kolben-Zylinder-Aggregat 14 eine entsprechend große Servokraft in der einen oder anderen Richtung erzeugt, derart, daß die am Lenkhandrad 1 bei dem jeweiligen Lenkmanöver aufzubringende Handkraft deutlich vermindert wird.

Ggf. kann die Steuerelektronik 29 in Abhängigkeit von vorzugebenden Parametern, bspw. der Fahrgeschwindigkeit, den Handkraftsteller 16 ansteuern, derart, daß der am Lenkhandrad 1 fühlbare Widerstand in vorgebbarer Weise verändert wird.

Eine wesentliche Besonderheit der Erfindung liegt nun darin, daß bei vorgebbaren Fahrzuständen, die durch mit der Steuerelektronik 29 kommunizierende Sensoren (nicht dargestellt) ermittelt werden, die Kupplung 15 geöffnet wird. Damit schaltet die Steuerelektronik 29 sämtliche Absperrventile 17 bis 19 und 27 sowie 28 in ihre jeweils anderen (nicht dargestellten) Lagen um. Dies hat zur Folge, daß das Servoventil 7 unwirksam wird und insbesondere nicht mehr mit dem Kolben-Zylinder-Aggregat 14 kommunizieren kann. Vielmehr ist das Kolben-Zylinder-Aggregat 14 nunmehr mit der Steuerventilanordnung 23 verbunden, die von der Steuerelektronik 29 betätigt wird. Dabei wird die Steuerventilanordnung 23 so betätigt, daß im Ergebnis der mittels des Sensors 31 ermittelte Istwert des Lenkwinkels der Fahrzeuglenkräder 6 einem Sollwert entspricht, der durch den mittels des Sensors 30 ermittelten Drehwinkel des Lenkhandrades 1 vorgegeben wird. Hierbei können praktisch beliebige Übersetzungsverhältnisse zwischen dem Drehwinkel des Lenkhandrades 1 und dem Lenkwinkel der Fahrzeuglenkräder 6 verwirklicht werden.

Dabei kann das Übersetzungsverhältnis insbesondere in Abhängigkeit von der ebenfalls mittels des Sensors 30 ermittelbaren Drehgeschwindigkeit des Lenkhandrades 1 verändert werden.

Bei dieser Betriebsweise wird mittels der Steuerventilvorrichtung 23 am Kolben-Zylinder-Aggregat 14 eine je nach der Soll-Istwert-Abweichung größere oder kleinere Druckdifferenz in der einen oder anderen Richtung eingestellt, so daß das Kolben-Zylinder-Aggregat 14 die gewünschte Lenkbewegung der Fahrzeuglenkräder 6 bewirken.

Sobald der gewünschte Lenkwinkel eingestellt ist, wird die Steuerventilanordnung 23 in die dargestellte Schließlage zurückgesteuert, in der das Kolben-Zylinder-Aggregat 14 hydraulisch gesperrt ist. Da nunmehr das Kolben-Zylinder-Aggregat 14 außerdem gegenüber der Hydraulikpumpe 9 abgetrennt ist, wird der Druckspeicher 22 nachgeladen, bis der Drucksensor 32 das Erreichen eines oberen Druckschwellwertes meldet. Sodann kann die Pumpe 9 stillgesetzt werden. Sobald nachfolgend die Steuerventilanordnung 23 aus der geschlossenen Mittellage ausgesteuert wird, weil ein erneutes Lenkmanöver erfolgen soll, erfolgt die hydraulische Druckzufuhr zum Kolben-Zylinder-Aggregat 14 zunächst durch den Druckspeicher 22. Darüber hinaus wird die Hydraulikpumpe 9 wieder eingeschaltet, sobald ein unterer Druckschwellwert am Drucksensor 32 unterschritten wird.

Wahlweise kann die Hydraulikpumpe 9 auch in Dauerbetrieb laufen. Dabei kann das umgewälzte, nicht benötigte Öl über das Ventil 17 zum Steuerventil 7 und durch dessen offene Mitte über den Rücklauf 11 in den Tank zurückströmen. Die Ventile 18 und 19 sind dabei geschlossen, während die Steuerventilanordnung 23 aktiv ist.

Bei geöffneter Kupplung 15 steuert die Steuerelektronik 29 außerdem ständig den Handkraftsteller 16, so daß am Handlenkrad 1 ein Stellwiderstand fühlbar wird, wobei am Lenkhandrad 1 ähnliche Verhältnisse simuliert werden können, wie sie bei einem mechanischem Durchtrieb zwischen Lenkhandrad 1 und Fahrzeuglenkrädern 3 auftreten.

Wenn die Steuerelektronik 29 mit entsprechenden (nicht dargestellten) Sensoren versehen ist, kann die Steuerelektronik 29 auch besondere Lenkmanöver ausführen, um bspw. das Fahrzeug nach bzw. bei einer Seitenbö zu stabilisieren oder eine Schleuderbewegung abzufangen.

Die Steuerelektronik 29 überprüft sich ständig auf richtige Funktionsweise. Sobald ein Fehler festgestellt werden sollte, wird die Stromversorgung der Elektromagnete der Umschaltventile 17 bis 18 und 27 sowie 28 sofort abgeschaltet, so daß diese Ventile in die in der Zeichnung dargestellten Lagen umschalten. Gleichzeitig wird auch das in der Regel elektrische Betätigungsorgan der Kupplung 15 von der Stromversorgung abgeschaltet, so daß die Kupplung 15 durch eine Schließfederung o.dgl. in ihre Schließlage umgeschaltet wird. Damit liegt im Ergebnis wieder eine herkömmliche Servolenkung mit mechanischem Durchtrieb zwischen Lenkhandrad 1 und Fahrzeuglenkrädern 6 vor.

## Patentansprüche

1. Servolenkung für Kraftfahrzeuge, mit einer mechanischen Antriebsverbindung (2) zwischen einer Lenkhandhabe, insbesondere einem Lenkhandrad (1), und einer Lenkgetriebeanordnung (3,4,5) zur Lenkbetätigung von Fahrzeugrädern (6) und mit einem mit der Lenkgetriebeanordnung antriebsgekoppelten Servomotor (14) sowie einer Kupplung (15), durch die die Antriebsverbindung auftrennbar ist, wobei der Servomotor bei geöffneter Kupplung über ein Steuerventil (23) steuerbar ist, welches seinerseits mittels einer Regelstrecke (29) in Abhängigkeit von einer Differenz zwischen einer mit dem Lenkwinkel der Fahrzeugräder korrelierten ersten Größe und einer zumindest mit dem Stellhub der Lenkhandhabe korrelierten zweiten Größe steuerbar ist, wobei zusätzlich ein mit der Antriebsverbindung gekoppeltes und analog zu den von der Antriebsverbindung übertragenen Kräften oder Momenten steuerbares Servoventil (7) vorhanden ist, über das der Servomotor steuerbar mit Druck- und Niederdruckanschlüssen (8,11) verbindbar ist, derart, daß der Servomotor eine die notwendige Betätigungskraft an der Handhabe vermindernde Servokraft erzeugt, und wobei der Servomotor durch eine Umschaltventilanordnung (18,19,27,28) entweder mit Motoranschlüssen des Steuerventils (23) oder mit Motoranschlüssen des Servoventils (7) verbunden ist,
**dadurch gekennzeichnet,**
daß der Servomotor (14) über normal geöffnete Umschaltventile (18,19) mit den Motoranschlüssen des Servoventils (7) und über normal geschlossene Umschaltventile (27,28) mit den Motoranschlüssen des Steuerventils (23) verbindbar ist und diese Umschaltventile (18,19,27,18) nur bei fehlerfrei arbeitender Regelstrecke (19) von derselben in ihre jeweils andere Lage steuerbar sind.

2. Servolenkung nach Anspruch 1,
**dadurch gekennzeichnet,**
daß das Servoventil (7) eine offene Mitte aufweist.

3. Servolenkung nach Anspruch 1 oder 2,
**dadurch gekennzeichnet,**
daß das gesonderte Steuerventil (23) eine geschlossene Mitte aufweist.

4. Servolenkung nach einem der Ansprüche 1 bis 3,
**dadurch gekennzeichnet,**
daß an einer eine Servopumpe (9) druckseitig mit dem Steuerventil (23) verbindenden Leitung ein Druckspeicher (22) angeordnet und gegen Rückschlag in Richtung der Pumpe (9) durch ein Rückschlagventil (21) gesichert ist.

## Claims

1. A servo-steering system for motor vehicles, with a mechanical drive connection (2) between a steering means, in particular a steering wheel (1), and a steering gear arrangement (3,4,5) for the steering actuation of motor vehicle wheels (6) and with, coupled to the steering gear arrangement for drive, a servomotor (14) and a clutch (15) by which it is possible to separate the driving connection whereby the servomotor, when the clutch is open, can be controlled via a control valve (23) which is in turn adapted to be controlled by means of a controlled member (29) as a function of a difference between a first magnitude correlated with the steering angle of the vehicle wheels and a second value correlated at least with the positioning travel of the steering means whereby there is additionally, coupled to the drive connection, a servo-valve (7) adapted to be controlled in the same way by the forces or moments transmitted by the driving connection and by means of which the servomotor is adapted to be connected in controllable manner with pressure and low-pressure connections (8,11), so that the servomotor generates a servo-force which reduces the actuating force needed at the steering means, the servomotor being connected by a switch-over valve arrangement (18,19,27,28) either to motor connection of the control valve (23) or to motor connections of the servo-valve (7),
**characterised in that**
the servomotor (14) is adapted to be connected via normally opened switch-over valves (18,19) to the motor connections of the servo-valve (7) and via normally closed switch-over valves (27,28) to the motor connections of the control valve (23) and in that these switch-over valves (18,19,27,28) are adapted to be controlled by the controlled member (19) into whichever is their other position but only when the controlled member (19) is operating in a fault-free manner.

2. A servo-steering system according to Claim 1, characterised in that the servo-valve (7) has an open centre.

3. A servo-steering system according to Claim 1 or 2, characterised in that the separate control valve (23) has a closed centre.

4. A servo-steering system according to one of Claims 1 to 3, characterised in that a pressure storage means (22) is disposed on a line connecting the control valve (23) to the pressure side of a servo-pump (9) and is secured against reflux in the direction of the pump (9) by a non-return valve (21).

## Revendications

1. Direction assistée pour véhicules à moteur, comportant une liaison pour entraînement mécanique (2) entre un outil de manoeuvre de braquage, en particulier un volant (1), et un mécanisme de braquage (3, 4, 5) pour la manoeuvre de braquage des roues (6) d'un véhicule, ainsi qu'un servo-moteur (14) couplé pour entraînement avec le mécanisme de braquage et un coupleur (15) au moyen duquel la liaison pour entraînement peut être supprimée, dans le cas de laquelle, le coupleur étant découplé, le servo-moteur peut être commandé par l'intermédiaire d'un robinet de commande (23) qui de son côté peut, au moyen d'une ligne de régulation (29), être commandé en fonction d'une différence entre une première grandeur corrélée avec l'angle de braquage des roues du véhicule et une seconde grandeur au moins corrélée avec la course du volant, dans le cas de laquelle en outre il existe une servo-vanne (7) qui est couplée à la liaison pour entraînement, qui peut être commandée par analogie avec les forces ou les moments transmis par la liaison pour entraînement et par l'intermédiaire duquel le servo-moteur peut être relié, pour être commandé, avec des raccords sous pression et sous basse pression (8, 11) de façon que le servo-moteur produise une servo-force qui réduit la force de manoeuvre nécessaire sur le volant, et dans le cas de laquelle le servo-moteur est relié, par l'intermédiaire d'un dispositif de robinets de commutation (18, 19, 27, 28), soit avec des raccords moteur du robinet de commande (23) soit avec des raccords moteur de la servo-vanne (7), caractérisée par le fait que le servo-moteur (14) peut être relié, par l'intermédiaire de robinets de commutation (18, 19) normalement ouverts, avec les raccords moteur de la servo-vanne (7) et, par l'intermédiaire de robinets de commutation normalement fermés (27, 28), avec les raccords moteur du robinet de commande (23) et que ces robinets de commutation (18, 19,, 27, 18) ne peuvent être commandés par la ligne de régulation (19), pour passer dans leur autre position respective, que si cette ligne de régulation (19) travaille sans défaut.

2. Direction assistée selon la revendication 1, caractérisée par le fait que la servo-vanne (7) présente une position médiane ouverte.

3. Direction assistée selon la revendication 1 ou 2, caractérisée par le fait que le robinet de commande spécial (23) présente une position médiane fermée.

4. Direction assistée selon l'une des revendications 1 à 3, caractérisée par le fait que sur une conduite reliant une servo-pompe (9), côté pression, au robinet de commande (23), est disposé un accumulateur de pression (22) qu'un clapet de non-retour (21) garantit à l'égard d'un retour en direction de la pompe (9).
